# EUROPEAN PATENT SPECIFICATION

(11) **EP 2 002 591 B1**
(45) Date of publication and mention of the grant of the patent: **21.10.2015**
(21) Application number: 07740467.1
(22) Date of filing: 23.03.2007
(51) Int. Cl.: H04L 29/06, H04W 12/04, H04W 12/06, H04L 9/08, H04L 9/32, H04B 3/54

(54) **AUTHENTICATION RELAY APPARATUS, AUTHENTICATION RELAY SYSTEM, INTEGRATED CIRCUIT, AND AUTHENTICATION RELAY METHOD**
VORRICHTUNG ZUR AUTHENTIFIZIERUNGSWEITERLEITUNG, SYSTEM ZUR AUTHENTIFIZIERUNGSWEITERLEITUNG, INTEGRIERTE SCHALTUNG UND VERFAHREN ZUR AUTHENTIFIZIERUNGSWEITERLEITUNG
APPAREIL DE RELAIS D'AUTHENTIFICATION, SYSTÈME DE RELAIS D'AUTHENTIFICATION, CIRCUIT INTÉGRÉ ET PROCÉDÉ DE RELAIS D'AUTHENTIFICATION

(30) Priority: 24.03.2006 JP 2006082305
(43) Date of publication of application: 17.12.2008
(73) Proprietor: Panasonic Corporation, Kadoma-shi Osaka 571-8501 (JP)
(72) Inventor: YOKOMITSU, Yasushi Matsushita Electric Industrial Co., Ltd., 2-1-61 Shiromi, Chuo-ku Osaka-shi Osaka 540-6207 (JP); ZHANG, Yibo Matsushita Electric Industrial Co., Ltd., 2-1-61 Shiromi, Chuo-ku Osaka-shi Osaka 540-6207 (JP); AKAMINE, Hector Matsushita Electric Industrial Co., Ltd., 2-1-61 Shiromi, Chuo-ku Osaka-shi Osaka 540-6207 (JP)
(74) Representative: Eisenführ Speiser
(86) International application number: PCT/JP2007/057029
(87) International publication number: WO 2007/119604

(56) References cited:
- WO-A-99/58987
- US-A1- 2001 045 888
- US-A1- 2004 223 617
- US-A1- 2005 201 557
- US-A1- 2006 038 660

## Description

### Technical Field

The present invention relates to an authentication relay apparatus, an authentication relay system, an integrated circuit, and an authentication relay method, which facilitate registration of a slave apparatus to a network which is constituted by the master apparatus and the slave apparatus without causing much trouble to a user when both or one of the registration messages having restricted communication range(s) between a master apparatus and a slave apparatus to be registered is/are not reached, in the network through which a registration message having a restricted communication range compared to a normal communication range is exchanged between the master apparatus and the slave apparatus to be registered.

### Background Art

WO 1999/058987 A provides a value store electric power meter. The server of an electric power supplier, an electric power seller, or an electric power reseller transfers value through an electric power line through a built-in electric power modem, stores value received through the electric power modem inside the value store electric power meter in a value store module, reduces a value according to the amount of electric power consumption, omits processes of visually reading a meter, calculating the amount of use, printing and mailing a bill, settling up, and paying an uncollected amount and arrears. Accordingly, it is possible to save electric power supplying costs, to reduce the electric power rate by a user, and maximizing the profit of the electric power supplier. The electric power meter is used for IC card payment type gas and water meters in which the IC card having credit value is transferred and stored in an off-line state. Accordingly, the electric power value and the added value measurement is easily and rapidly performed. Therefore, it is convenient for the user and remarkably reduces all the costs.

US 2004/0223617 A1 describes a repeater of the present invention communicating data signals over power lines. The repeater of one embodiment includes at least one modem that receives a data packet and attempts to decrypt the data packet with a first and/or second encryption key. If the packet is successfully decrypted using the first encryption key, the packet is encrypted using the second encryption and transmitted over the power line. If the packet is successfully decrypted using the second encryption key, the packet is encrypted using the first encryption and transmitted over the power line.

US 2001/0045888 A1 describes isolating data in a power line communications system. Although plural subscribers receive electric power distributed from a common distribution transformer, it is desirable to isolate their branch lines from one another when those branch lines are used to conduct data communications as a supplement to electric power delivery. This isolation of branch lines implemented in a centralized way at the distribution transformer, or alternatively, in a distributed way at each subscriber's premises. These implementations are made using low pass filters (which pass the power but block the data) and power line communications routers or power line communications repeaters.

US 2006/0038660 A1 describes a method and apparatus for protecting privacy in power line communication (PLC) networks. Data transmitted on a PLC network is encrypted according to a network key and can be properly received only by registered devices that have the proper network ID and network key value so that proper decryption can be performed. According to the invention a streaming media device is provided with a compatible network ID and network key during a registration process facilitated by coupling the device (applicant) to a direct power line connection associated with another device (administrator). The network key, and optionally network ID, are then shared over the direct connection without being distributed over the PLC network at large. By way of example, the data is prevented from being distributed across the PLC network in response to using selectable filtering of PLC data, and preferably a secure data communication mechanism, such as public-private key encoding.

A communication network such as a wireless LAN or a power line communication (PLC) is constituted by elements including a master apparatus and a plurality of slave apparatuses. A slave apparatus is a normal communication apparatus which transmits and receives data. A master apparatus is an apparatus which performs network management such as controlling an access of a slave apparatus to a network. Through the network, an apparatus serving as a master apparatus may be an apparatus dedicated to serving such a role, or may be a slave apparatus serving to perform normal data transmission and reception and to perform network management. A wireless LAN typically includes an access point serving as a master apparatus, and a wireless terminal serving as a slave apparatus. PLC is a technology which enables data communication on a cable used to supply power. When a PLC modem is mounted in household electric equipment, connecting a power source cable to an outlet allows for data communications with other equipment connected to an outlet in a communication range at home, without using a dedicated network cable for communication-use.

Compared to a common wired network, interception by a malicious third party easily occurs in a network using a wireless LAN or the PLC technology. In order to prevent such a problem, an encryption is used for communication. In a wireless LAN or the PLC, an encryption is used on a link layer, using a network key (group key). In this case, a slave apparatus needs to have a key to decrypt a message received from another slave apparatus, or to encrypt a message to be sent to another slave apparatus.

Conventionally, a network key for each slave apparatus is set by a user's manual operation. For example, in a wireless LAN compatible with the IEEE802.11 standard, a network key called a WEP key needs to be entered at an access point and in a wireless terminal desired to be used in the wireless LAN. Such a manual setting, however, is a troublesome operation for a user and causes difficulties to a user who is not used to setting up a PC.

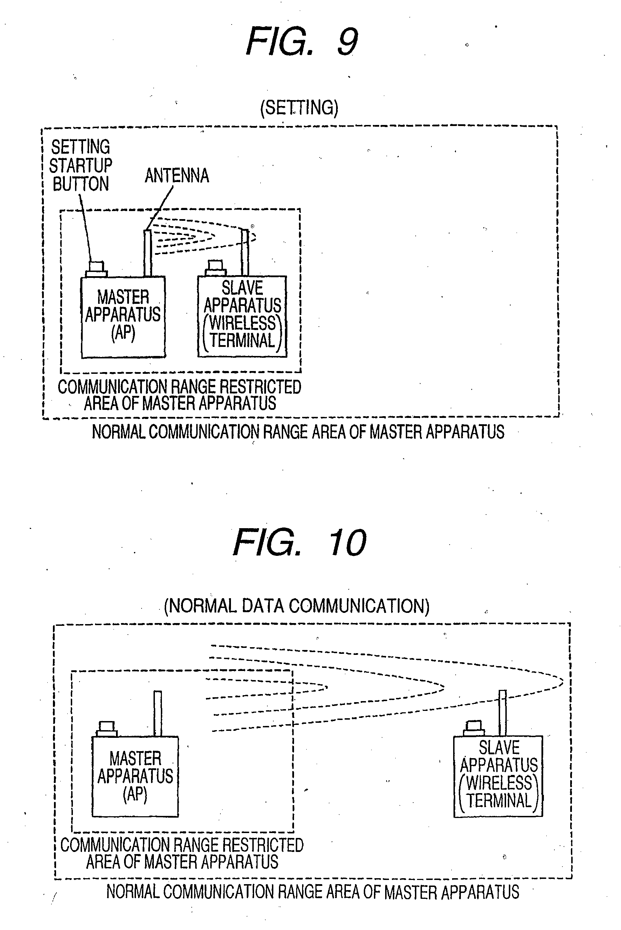

US Published Patent Application No. 2005/0201557 proposes a system for adding a terminal in a wireless LAN without causing a user much trouble. According to the system, a network is established through a simple operation such as only pressing a button, so that the need to enter the WEP key is eliminated. Fig. 9 and Fig. 10 are views illustrating conventional techniques. With reference to Fig. 9 and Fig. 10, the system is briefly described.

According to the system, in a master apparatus and a slave apparatus to be added, the slave apparatus is automatically set by pressing a button. During the setting, information of a WEP key is transmitted from the master apparatus to the slave apparatus by wireless communication.

In order to prevent the WEP key from being leaked to another slave apparatus other than the slave apparatus to be added, the information of the WEP key is transmitted so that it reaches only within a range much narrower than a normal communication range. This requires a slave apparatus to be located close to a master apparatus during the setting, as shown in Fig. 9. For example, when setting a notebook PC having a wireless LAN interface, the notebook PC needs to be moved close to an access point. After completion of the setting, the slave apparatus may be used remote from the master apparatus within a normal communication range area, as shown in Fig. 10.

In a wireless LAN, adjusting the level of a radio wave enables restriction of a range in which a message reaches. In a PLC network, similarly, changing a modulation system or transmission power used for data transmission enables switching of a range in which a message reaches.

Further, Japanese Patent No. 3190832 proposes a method for adding, in a cordless telephone system constituted by a master apparatus and a slave apparatus, a slave apparatus (i.e., for registering a new slave apparatus to the master apparatus) by a user's simple operation. According to the system, with a user's operation made on a registered slave apparatus, the master apparatus is shifted to a registration mode and a registration signal is transmitted from the master apparatus. Further, with a user's operation made on the slave apparatus to be added, the registration signal is received from the master apparatus and a confirmation signal is returned to the master apparatus.

### Disclosure of Invention

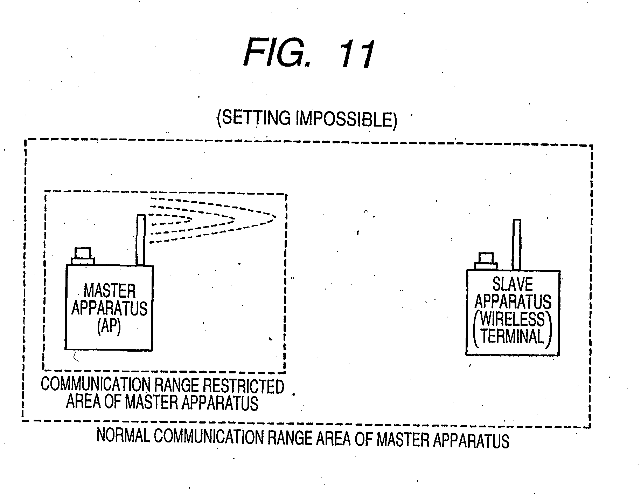

US Published Patent Application No. 2005/0201557 has the following problems. Since a communication range of a message is narrowed during the setting, the master apparatus and the slave apparatus need to be located close to each other. Fig. 11 is a view illustrating problems of a conventional technique. As shown in Fig. 11, the setting cannot be performed when the master apparatus and the slave apparatus are remote from each other. Thus, unless one of them is moved close to the other, the setting cannot be performed. Further, it is inconvenient or impossible to move the master apparatus and the slave apparatus close to each other, when the master apparatus is set on a switchboard or ceiling or when the slave apparatus is a large apparatus.

In view of the foregoing problems, the following embodiment is made. In the embodiment, an authentication relay apparatus, an authentication relay system, an integrated circuit, and an authentication relay method are proposed, which enable a slave apparatus to be registered safely.

A first aspect of the invention made to solve the foregoing problems is an authentication relay apparatus as defined in claim 1.

According to the configuration, the authentication of the first communication apparatus and the second communication apparatus is relayed via the power line. Thus, even when the first communication apparatus and the second communication apparatus connected to the power line are remote from each other, authentication of the first communication apparatus and the second communication apparatus can be performed.

According to the configuration, the information for the second key is encrypted using the first key, and transmitted to the first communication apparatus. This allows, even when the first communication apparatus and the second communication apparatus are remote from each other, the information for the second key to be relayed between the first communication apparatus and the second communication apparatus, without being known to a third party. Since the same key can be shared between the first communication apparatus and the second communication apparatus with ensured security, the second communication apparatus can be safely authenticated to the first communication apparatus.

According to the configuration, the authentication relay apparatus controls communication ranges in relation to the first communication apparatus and the second communication apparatus. This prevents the authentication relay apparatus from accidentally authenticating a communication apparatus of a third party (e.g. a neighbor), and thereby improves the security.

A second aspect of the invention made to solve the foregoing problems is an authentication relay apparatus according to the invention, wherein the communication range control section (104) controls a transmission section (105) so that the communication range in relation to the second communication apparatus (e.g. 220) becomes narrower than the communication range in relation to the first communication apparatus (e.g. 210).

According to the configuration, the authentication relay apparatus authenticates a second communication apparatus that is located near the authentication relay apparatus as close as possible. This prevents the authentication relay apparatus from accidentally authenticating a second communication apparatus of a third party (e.g. a neighbor), and thereby improves the security.

A third aspect of the invention made to solve the foregoing problems is an authentication relay apparatus according to the invention, wherein the information for the second key is at least one of a MAC address, a random number, a cryptographic algorithm, and a seed of the second apparatus.

According to the configuration, the first communication apparatus and the second communication apparatus can share the second key and address information with ensured security. This enables the first communication apparatus and the second communication apparatus to perform communication safely.

A fourth aspect of the invention made to solve the foregoing problems is an authentication relay apparatus according to the invention, wherein the encryption section (101) encrypts, using the first key (K1), information for at least one of the first communication apparatus and the second communication apparatus, and a relay section (105) transmits the information encrypted by the encryption section to the first communication apparatus (e.g. 210).

According to the configuration, the first communication apparatus and the second communication apparatus can share information of the second key with ensured security. This enables the first communication apparatus and the second communication apparatus to perform communication safely.

A fifth aspect of the invention made to solve the foregoing problems is an authentication relay apparatus according to the fourth aspect of the invention, wherein information for the first communication apparatus (e.g. 210) and the second communication apparatus (e.g. 220) is address information for at least one of the first communication apparatus and the second communication apparatus.

According to the configuration, the first communication apparatus and the second communication apparatus can share the second key and the address information with ensured security. This enables the first communication apparatus and the second communication apparatus to perform communication safely.

A sixth aspect of the invention made to solve the foregoing problems is an authentication relay apparatus according to the invention, wherein the transmission section (105) relays the information encrypted by the encryption section (101) to the first communication apparatus (e.g. 210) via a power line (250).

According to the configuration, the first communication apparatus and the second communication apparatus can share the same key with ensured security, even when one of the first communication apparatus and the second communication apparatus is fixed, around the power line, on a switchboard or ceiling. This enables the first communication apparatus and the second communication apparatus to safely perform communications via the power line.

A seventh aspect of the invention made to solve the foregoing problems is an authentication relay apparatus according to the invention, and the apparatus further includes a key generating section (11a) for generating at least one of the first key (K1) and the second key (K2).

According to the configuration, the first communication apparatus and the second communication apparatus can generate at least one of the first key and second key with ensured security.

An eighth spect of the invention made to solve the foregoing problems includes: a first communication apparatus (e.g. 210) serving as a master apparatus; a second communication apparatus (e.g. 220) serving as a slave apparatus; and an authentication relay apparatus (100) according to the first aspect of the invention.

According to the system, the authentication of the first communication apparatus and the second communication apparatus is relayed via a power line. Thus, even when the first communication apparatus and the second communication apparatus connected to the power line are remote from each other, authentication of the first communication apparatus and the second communication apparatus can be performed.

A ninth aspect of the invention made to solve the foregoing problems is an authentication relay method as defined in claim 11.

According to the method, the authentication of the first communication apparatus and the second communication apparatus is relayed via the power line. This enables authentication of the first communication apparatus and the second communication apparatus even when the first communication apparatus and the second communication apparatus connected to the power line are remote from each other.

According to the authentication relay method, the information for the second key is encrypted using the first key, and relayed between the first communication apparatus and the second communication apparatus. Thus, even when the first communication apparatus and the second communication apparatus are remote from each other, the information for the second key can be relayed between the first communication apparatus and the second communication apparatus, without being known to a third party. This enables the same key to be shared between the first communication apparatus and the second communication apparatus with ensured security, thereby enabling to safely authenticate the second communication apparatus to the first communication apparatus.

Note that, numbers etc., in parentheses indicate elements corresponding to those described in the drawings for convenience in order to help understand the present invention. Thus, the descriptions made herein are not limited by descriptions in the drawings, and the present invention shall not be interpreted by the description of the symbols.

According to the authentication relay apparatus, the authentication relay system, the integrated circuit, and the authentication relay method, even when a master apparatus and a slave apparatus are remote from each other and a registration message is not directly reached, the slave apparatus can be registered to the master apparatus, and a common key is set between the master apparatus and the slave apparatus so that the master apparatus safely distributes a network key to the slave apparatus.

### Brief Description of Drawings

Fig. 1 is a block diagram illustrating a configuration of a representative registration apparatus according to an embodiment;
Fig. 2 is a block diagram illustrating one example of a circuit configuration of a representative registration apparatus according to an embodiment;
Fig. 3 is a block diagram illustrating a configuration of a network system to which a representative registration apparatus according to an embodiment is applied;
Fig. 4 is a block diagram illustrating a configuration of a network system to which a representative registration apparatus according to an embodiment is applied;
Fig. 5 is a flowchart representing a registration of a slave apparatus using a representative registration apparatus according to an embodiment;
Fig. 6 is a flowchart representing a registration of a slave apparatus using a representative registration apparatus according to an embodiment;
Fig. 7 is a block diagram illustrating a network configuration when a common key has previously been set between a representative registration apparatus and a master apparatus before a registration of a slave apparatus according to an embodiment is started;
Fig. 8 is a flowchart representing a previous setting of a common key between a representative registration apparatus and a master apparatus before a registration of a slave apparatus according to an embodiment is started;
Fig. 9 is a view illustrating a conventional art;
Fig. 10 is a view illustrating a conventional art; and
Fig. 11 is a view illustrating problems of a conventional art.

### Best Mode for Carrying Out the Invention

The following description is made referring to the drawings.

As used herein, when a network is constituted by a plurality of terminals, a terminal serving to manage communication with other terminals is referred to as a master apparatus, and a terminal performing communication under the management of the master apparatus is referred to as a slave apparatus.

Further, a key is data for controlling steps of a cryptographic algorithm.

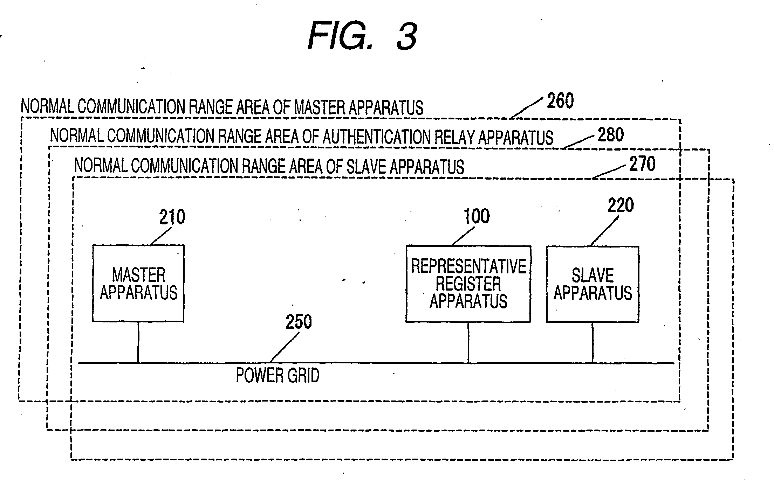

As shown in Fig. 3, the network employs a power line communication (PLC). Fig. 3 shows a master apparatus 210, a slave apparatus 220, and a representative registration apparatus 100 according to the present invention, and respective normal communication range areas 260, 270, and 280. Each of the master apparatus 210, the slave apparatus 220, and the representative registration apparatus 100 incorporate a PLC modem and are connected to a home-use power grid 250 through power cables, so as to perform communications via the power line. The master apparatus 210 is provided on a switchboard.

Note that, the representative registration apparatus 100 is one example of the authentication relay apparatus, the master apparatus 210 is one example of the first communication apparatus, and the slave apparatus 220 is one example of the second communication apparatus. The function of the master apparatus 210 is to manage communication between communication apparatuses in a network constituted by the master apparatus 210 and the slave apparatus 220. For example, the function includes synchronizing communication apparatuses according to a synchronous signal such as a beacon, and scheduling communications between communication apparatuses. Furthermore, the function of the slave apparatus 220 is to communicate with another communication apparatus under the management of the master apparatus 210.

Each of the master apparatus 210, the slave apparatus 220, and the representative registration apparatus 100 can transmit a message within a normal communication range or restricted communication range. The normal communication range is used for ordinary data communication and the restricted communication range is used to transmit a registration message. By restricting the communication range of a message, it becomes possible, for example, to transmit the message exclusively to devices plugged into outlets provided on the same power source wall from a certain device. This prevents data from being leaked to a malicious third party, and thereby enhances the security. Since the slave apparatus 220 exchanges key information when registered, it can perform cipher communications. This prevents data leakage even when a message is transmitted in a normal communication range area after the registration. In a PLC network, a communication range of a transmission message can be restricted by changing a modulation system or transmission power.

In a network configuration of Fig. 3, each of the master apparatus 210, the slave apparatus 220, and the representative registration apparatus 100 is within normal communication range areas of the other apparatuses. For example, assuming that the PLC network of Fig. 3 is in a house, although it depends on the size of the house or other factors, in a normal case, when an apparatus is plugged into any outlet in the same house, the apparatus is considered to be in normal communication range areas of the other apparatuses.

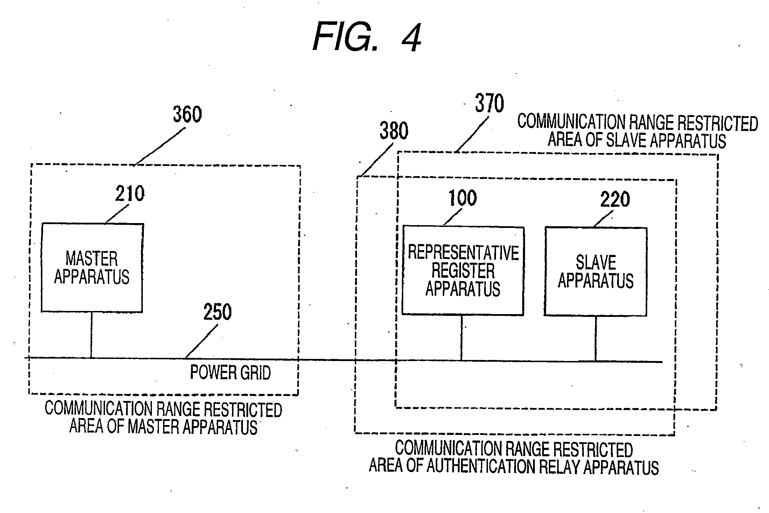

As shown in Fig. 4, a slave apparatus and a representative registration apparatus are outside of a communication range restricted area 360. Further, the slave apparatus and the representative registration apparatus are in mutual communication range restricted areas. When a network is assumed to be in a house for example, it is considered that the slave apparatus 220 and the representative registration apparatus 100 are plugged into outlets provided on the same wall of a room, and the master apparatus 210 is in another room.

The representative registration apparatus 100 is a representative register authentication apparatus according to the present invention, which facilitates registration of the slave apparatus 220 to the master apparatus 210.

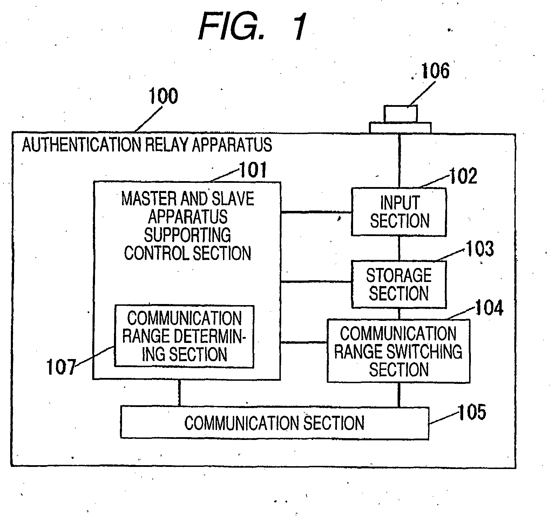

Fig. 1 is a block diagram illustrating a configuration of a representative registration apparatus according to first and second embodiments of the present invention. The representative registration apparatus 100 includes: a communication section 105 incorporating a communication interface function and capable of transmitting and receiving a message to and from a network; a master and slave apparatus supporting control section 101 which instructs functional sections to perform their processes, analyzes a message received at the communication section 105, generates a message to be sent to the master apparatus 210 or the slave apparatus 220, and conveys the message to the communication section 105; an input section 102 for receiving from a user instructions for starting registration; a storage section 103 for storing key information; a communication range switching section 104 for switching, according to a destination of a packet sent from the communication section 105, a transmission range of the packet; and a communication range determining section 107 which determines, according to a destination of a packet sent from the communication section 105, a transmission range of the packet and provides instructions to the communication switching section 104. In Fig. 1, the communication range determining section 107 is shown as part of the master and slave apparatus supporting control section 101. However, this may not be the only case. Further, in Fig. 1, although a push button 106 is shown as an interface between the input section 102 and a user, another interface may be used. Further, the representative registration apparatus 100 may be an apparatus dedicated to this role, or may serve as a slave apparatus. In the latter case, the apparatus includes means for switching operations of the representative registration apparatus and of the slave apparatus.

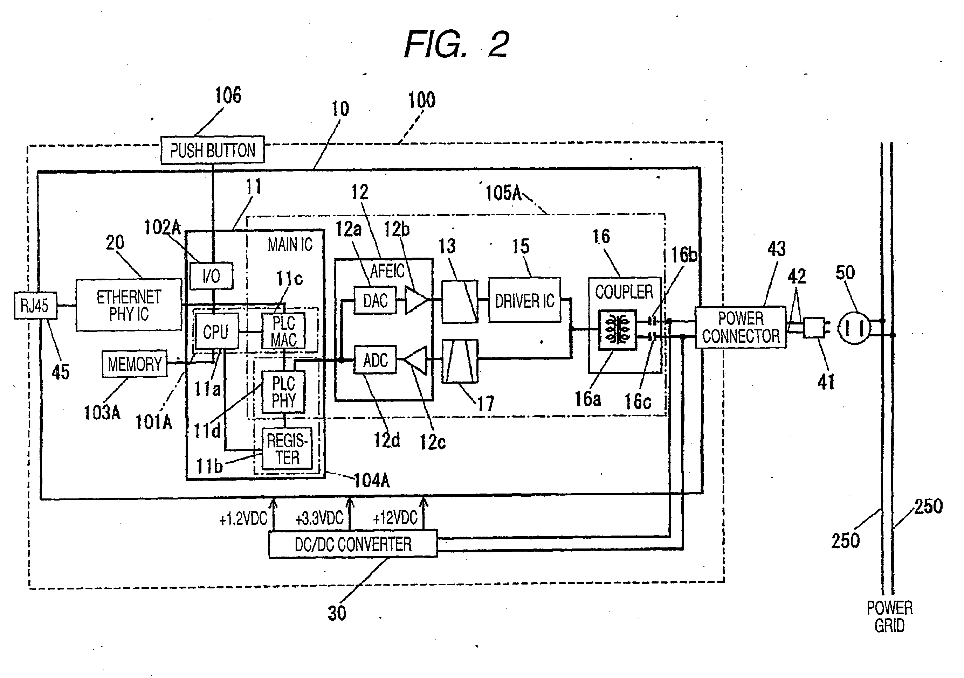

As shown in Fig. 2, the representative registration apparatus 100 includes a power source connector 43 and a modular jack 45 such as an RJ 45. The power source connector 43 is connected to a plug 41 via power lines 42. The plug 41 is connected via an outlet 50 to power lines 250 constituting power grids.

Further, the representative registration apparatus 100 includes a circuit module 10 and a DC/DC converter 30. The DC/DC converter 30 supplies direct current voltages (e.g. +1.2V, +3.3 V, and +12V) to the circuit module 10. The circuit module 10 includes: a main IC 11; an AFE•IC (Analog Front End IC) 12; a lowpass filter 13; a driver IC 15; a coupler 16; a bandpass filter 17; a memory 103 A; and the Ethernet® PHY•IC 20.

The main IC 11 includes: a CPU (Central Processing Unit) 101A; a register 11b; a PLC•MAC (Power Line Communication•Media Access Control layer) block 11c; a PLC•PHY (Power Line Communication•Physical layer) block 11d; and an input and output interface (I/O) 102A. The CPU 111a implements a 32 bit RISC (Reduced Instruction Set Computer) processor. The PLC•MAC block 11c manages a MAC layer for a transmission signal, and the PLC•PHY block 11d manages a PHY layer for a transmission signal. The AFE•IC 12 includes a DA converter (DAC) 12a, an amplifier 12b, an AD converter (ADC) 12d, and a variable amplifier (VGA) 12c. The coupler 16 includes a coil transformer 16a, and coupling capacitors 16b and 16c.

The input and output interface (I/O) 102A of Fig. 2 is one example of the input section 102 of Fig. 1. The memory 103A of Fig. 2 is one example of the storage section 103 of Fig. 1. The CPU 11a and the PLC•MAC block 11c of Fig. 2 (the master and slave supporting control section 101A indicated by an alternate long and short dashed line in Fig. 2) are one example of the master and slave apparatus supporting control section 101 and the communication range determining section 107 of Fig. 1. The PLC•PHY block 11d and register 11b of Fig. 2 (the communication switching section 104A indicated by an alternate long and short dashed line in Fig. 2) are one example of the communication switching section 104 of Fig. 1. The PLC•PHY block 11d, the PLC•MAC block 11 c, the AFE•IC 12, the lowpass filter 13, the driver IC 15, the bandpass filter 17, and the coupler 16, all of which are shown in Fig. 2 (the communication section 105A indicated by an alternate long and short dashed line in Fig. 2), are one example of the communication section 105 of Fig. 1.

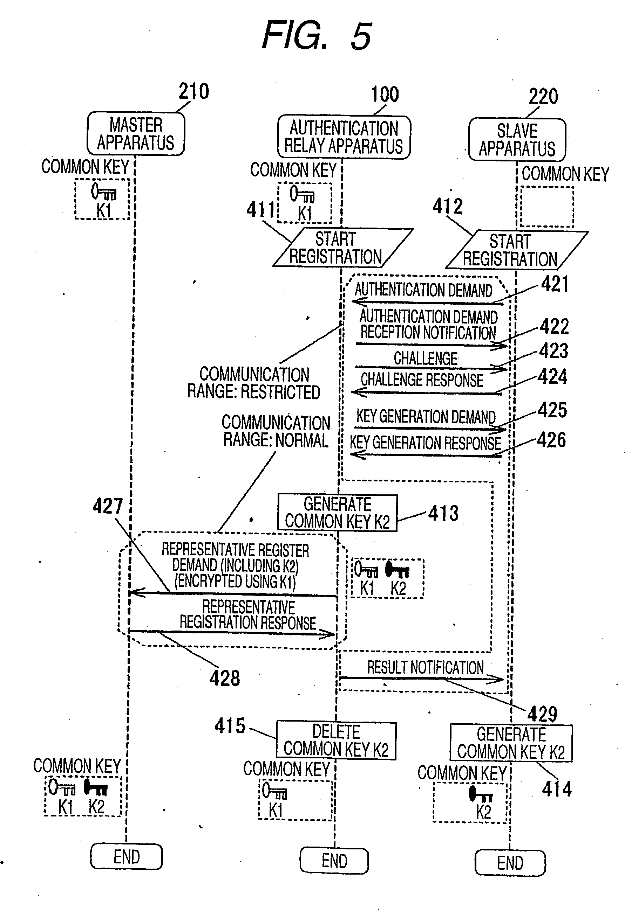

As shown in Fig. 5, the flow of registering a slave apparatus using a representative registration apparatus is represented. When a registration process is started in a representative registration apparatus 100 and a slave apparatus 220, the representative registration apparatus 100 and the slave apparatus 220 exchange registration information through a message having a restricted communication range. The representative registration apparatus 100 then encrypts registration information of the slave apparatus 220 using a common key that has previously been exchanged with a master apparatus 210, so as to transmit the registration information to the master apparatus 210. This allows the slave apparatus 220 to be registered to the master apparatus 210, even when the slave apparatus 220 is not located in a communication range restricted area 360 of the master apparatus 210.

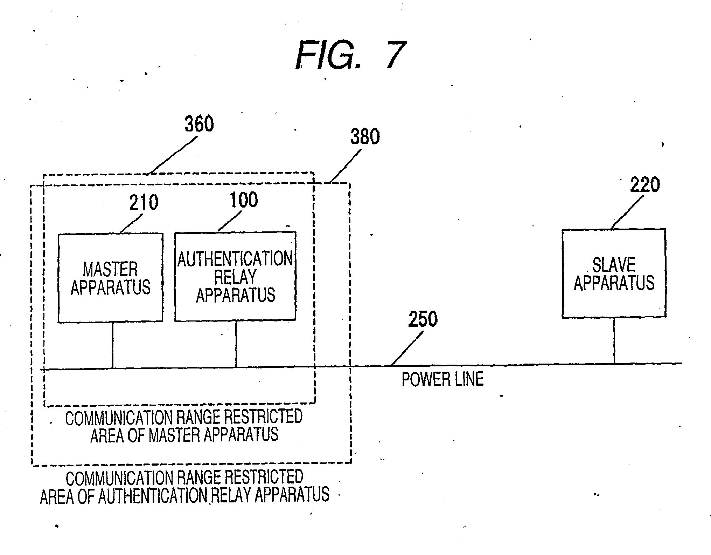

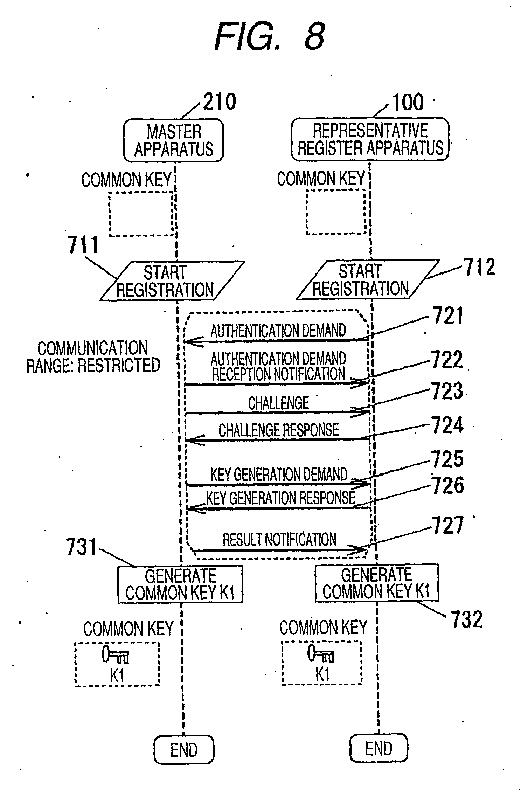

In Fig. 5, before registration of the slave apparatus 220 is started, a common key needs to be set between the master apparatus 210 and the representative registration apparatus 100 so that cipher communications can be performed therebetween. Hereinafter, the common key between the master apparatus 210 and the representative registration apparatus 100 is referred to as K1. In order to set K1, for example, the representative registration apparatus 100 can be registered as in registration of a slave apparatus, as shown in Fig. 7 and Fig. 8.

As shown in Fig. 7, in a case of a network configuration in which the common key K1 is set between the master apparatus 210 and the representative registration apparatus 100, the master apparatus 210 and the representative registration apparatus 100 need to be in their mutual communication range restricted areas. When the network is assumed to be in a house for example, it is considered that the master apparatus 210 and the representative registration apparatus 100 are plugged into outlets provided on the same wall of a room.

As shown in Fig. 8, a common key between a master apparatus 210 and a representative registration apparatus 100 has previously been set before the registration of a slave apparatus is started such that the representative registration apparatus 100 is registered as in registration of an ordinary slave apparatus. First, as shown in Steps 711 and 712, a process for registering the master apparatus 210 and the representative registration apparatus 100 is started by a user's operation such as pressing a button. The representative registration apparatus 100 selects a random number, and transmits an authentication request message 721 including the random number. The master apparatus 210 receives the authentication request message 721, acquires the random number, and returns an authentication request reception notification message 722. The master apparatus 210 and the representative registration apparatus 100 calculates an intermediate key called an authentication key based on the random number.

Next, the master apparatus 210 transmits a challenge message 723 encrypted using the authentication key. The representative registration apparatus 100 decrypts the challenge message using the authentication key, and transmits a hash of the message through a challenge response message 724. If the hash of the challenge message returned through the challenge response message 724 coincides with a hash calculated by the master apparatus 210, it means that the master apparatus 210 was able to authenticate the representative registration apparatus 100 and is allowed to transmit information of the common key K1. The master apparatus 210 encrypts, using the authentication key, the information for generating K1, and transmits it through a key generation request message 725. The representative registration apparatus 100 returns a key generation response 726, and the master apparatus 210 transmits a result notification message 727 for notifying completion of the registration.

Finally, the master apparatus 210 and the representative registration apparatus 100 generate a common key K1 in Steps 731 and 732. In this way, the common key K1 is stored in the storage section 103 of the representative registration apparatus 100.

Since communication ranges for the messages 721, 722, 723, 724, 725, 726, and 727 between the representative registration apparatus 100 and the master apparatus 210 are restricted, those messages do not reach outside of the communication range restricted areas 360 and 380. This prevents leakage of the exchanged information necessary for the registration, and thereby maintains the security.

The setting of the common key K1 shown in Fig. 7 and Fig. 8 is one example, and may be carried out by another method.

Referring back to Fig. 5, in the slave apparatus 220 and the representative registration apparatus 100, a registration process is started by a user's operation such as pressing a button, as shown in Steps 411 and 412. In the case of the representative registration apparatus 100, when a user presses the push button 106, the input section 102 notifies the master and slave apparatus supporting control section 101 of the operation, so that the master and slave apparatus supporting control section 101 goes into a state where a registration message can be received. The slave apparatus 220 has a similar mechanism for starting a registration process.

The slave apparatus 220 transmits an authentication request message 421 including a random number. The representative registration apparatus 100 receives the authentication request message 421, acquires the random number, and returns the authentication request reception notification message 422. The slave apparatus 220 and the representative registration apparatus 100 calculate an intermediate key called an authentication key, based on the random number. The intermediate key is one example of information of K2, and may be, for example, a cryptographic algorithm of K2 and a seed of K2.

As used herein, a key is data for controlling steps of the cryptographic algorithm.

Next, the representative registration apparatus 100 transmits a challenge message 423 encrypted using the authentication key. The slave apparatus 220 decrypts the challenge message using the authentication key, and transmits a hash of the challenge message through a challenge response message 424. If the hash of the message returned through the challenge response message 424 coincides with a hash that the representative registration apparatus 100 calculates, it means that the representative registration apparatus 100 was able to authenticate the slave apparatus 220. Thus, the representative registration apparatus 100 transmits information of a common key, referred to as a common key K2 hereinafter, which is shared between the master apparatus 210 and the slave apparatus 220. The representative registration apparatus 100 encrypts, using the authentication key, information for generating K2 and transmits the information through a key generation request message 425. The information for generating K2 is one example of information of K2, and may be, for example, a cryptographic algorithm of K2 or a seed of K2. The slave apparatus 220 then returns a key generation response message 426, and transmits address information of the slave apparatus to the representative registration apparatus 100 through any one of the messages 421, 424, and 426 of Fig. 5. The address information is information such as, for example, MAC address, for uniquely identifying the slave apparatus 220 in the power grids.

The representative registration apparatus 100 calculates a unique key K2 in Step 413, and stores it in the storage section 103.

The representative registration apparatus 100 encrypts, using K1, the unique key K2 and the address information of the slave apparatus 220, and transmits them to the master apparatus 210 through a representative register request message 427. The master apparatus 210 returns a representative registration response message 428. The representative registration apparatus 100 transmits to the slave 220 a result notification message 429 for notifying completion of the registration. Further, the representative registration apparatus 100 transmits through the result notification message 429 MAC address as address information of the master apparatus 210. Finally, the slave apparatus 220 generates a common key K2 in Step 414, and the representative registration apparatus 100 deletes K2 in Step 415. In this way, the common key K2 can be set in the master apparatus 210 and the slave apparatus 220. Using the common key K2, the slave apparatus 220 can safely acquire from the master apparatus 210 a network key to perform cipher communications in the network.

As seen from Fig. 5, the master and slave apparatus supporting control section 101 of the representative registration apparatus 100 appropriately generates a message, according to a message received from the slave apparatus 220 or the master apparatus 210, so that the slave apparatus 220 can be registered to the master apparatus 210. Further, the communication range switching section 104 determines, according to a destination of the message (the slave apparatus 220 or the master apparatus 210), a normal or restricted communication range and provides the communication section 105 with instructions for transmitting the message. The communication range switching section 104 sets a normal communication range to the master apparatus 210, and a restricted communication range to the slave apparatus 220.

In the present embodiment, the information for generating the common key K2 is exchanged through the messages 421 through 426 using a unique method. However, the information may be exchanged using another key exchange system such as, for example, Diffie-Hellman.

Further, there may be a case where Step 415 of Fig. 5 is omitted, and the common key K2 generated in Step 413 is not deleted but stored in the representative registration apparatus 100. In this case, the representative registration apparatus 100 stores information of the slave apparatus (e.g. MAC address of the slave apparatus), as in the case of the master apparatus 210. Further, in Step 429, as information to be notified to the slave apparatus 220, two MAC addresses, i.e., MAC address of the master apparatus and MAC address of the representative registration apparatus 100, are contained and notified to the slave apparatus 220. The slave apparatus 210 then stores the two MAC addresses thus received as information of the slave apparatus 220. The slave apparatus 220, when it receives a beacon of either of the two MAC addresses upon startup, starts an authentication process illustrated in Fig. 4, and establishes a PLC network. Normally, only the master apparatus 210 transmits a beacon. However, when the master apparatus 210 is broken, the representative registration apparatus 100 is used as an alternate of the master apparatus 210. This eliminates the need to newly register the slave apparatus to the alternate apparatus even when the master apparatus 210 is broken. Switching the representative registration apparatus 100 to the master apparatus 210 may be performed by controlling with a switch or by manipulating a switch on a WEB display.

Further, unlike the foregoing embodiment, in the following embodiment, the representative registration apparatus 100 does not generate a common key shared with the slave apparatus 220, but transfers a registration message from the slave apparatus 220 to the master apparatus 210, or a registration message from the master apparatus 210 to the slave apparatus 220.

As shown in Fig. 3 and Fig. 4, a network configuration used in a representative registration apparatus is the same as that of the foregoing embodiment. Further, as shown in Fig. 1, communication apparatuses have the same configuration as that of the foregoing embodiment.

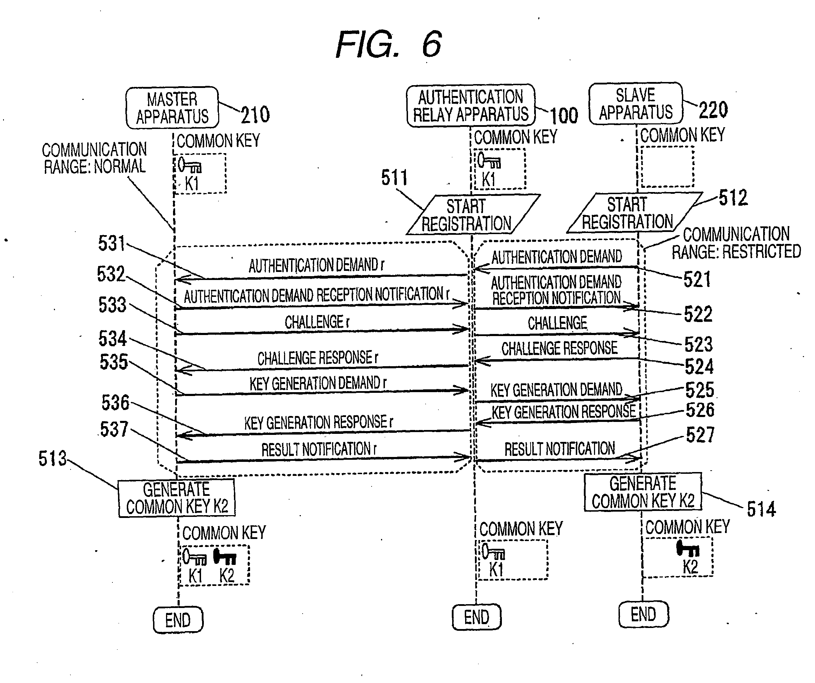

Fig. 6 is a flowchart representing registration of a slave apparatus using a representative registration apparatus. As in the case of Fig. 5 of the first embodiment, a common key to be shared between the master apparatus 210 and the representative registration apparatus 100 needs to be set before the registration of the slave apparatus 220 is started, so that cipher communications can be mutually performed therebetween. Hereinafter, the common key shared between a master apparatus 210 and a representative registration apparatus 100 is referred to as K1. The key K1 may be set between the master apparatus 210 and the representative registration apparatus 100 in a manner similar to the embodiment shown in Fig. 7 and 8.

Hereinafter, the representative registration apparatus 100 performs the following processes to a registration message described in an embodiment. The communication section 105 of the representative registration apparatus 100 receives a registration message, sent from the slave apparatus 220 to reach a communication range restricted area 370 of the slave apparatus 220. The master and slave apparatus supporting control section 101 of the representative registration apparatus 100 then encrypts the message using a common key K1 stored in a storage section 103, adds a header for transfer-use including address information of the slave apparatus 220, and transmits the message to reach a normal communication range area 380, so that the message is transferred to the master apparatus 210. Furthermore, the representative registration apparatus 100 performs the reverse processes to the encrypted registration message, sent from the master apparatus 210 to reach the normal communication range area 360. That is, the communication section 105 of the representative registration apparatus 100 receives the registration message from the master apparatus 210, and the master and slave apparatus supporting control section 101 removes the header for transfer-use of the registration message, decrypts the message using the common key K1 stored in the storage section 103, and transmits the message to reach the communication range restricted area 380 exclusively. In this way, the message is transferred to the slave apparatus 220.

In Fig. 6, a registration message is encrypted, a header for transfer-use is added thereto, and "r" is added to the last part of the name of the registration message. For example, the representative registration apparatus 100 receives an authentication request message 521 from the slave apparatus 220, encrypts the message, and adds a header for transfer-use, so as to transfer it to the master apparatus 210. This message is referred to as an authentication request r message 531. Similarly, a header for transfer-use is removed from a message received from the master apparatus 210, the message is decrypted, and "r" at the last part of the name of a message to be transmitted to the slave apparatus 220 is removed. For example, the representative registration apparatus 100 removes a header for transfer-use from a challenge r message 533 received from the master apparatus 210, and decrypts the message, so as to transfer it to the slave apparatus 220. This message to be transferred is referred to as a challenge message 523.

The flowchart of Fig. 6 is described as follows. First, in the slave apparatus 220 and the representative registration apparatus 100, a registration process is started by a user's operation such as pressing a button, as shown in Steps 511 and 512. In the case of the representative registration apparatus 100, when a user presses a push button 106, an input section 102 notifies a master and slave apparatus supporting control section 101 of the operation thus made, and the master and slave apparatus supporting control section 101 goes into a state where a registration message can be received. The slave apparatus 220 includes a similar mechanism for starting a registration process.

Upon startup of the registration process, the slave apparatus 220 transmits an authentication request message 521 including a random number. The representative registration apparatus 100 receives the authentication request message 521 and, as in the above process, changes it to an authentication request r message 531 so that it reaches the master apparatus 210. The master apparatus 210 receives the authentication request r message 531, acquires the random number, and returns the authentication request reception notification r message 532. The representative registration apparatus 100 receives the authentication request notification r message 532 and, as in the above process, changes the message to an authentication request reception notification message 522 so that it reaches the slave apparatus 220. The master apparatus 210 and the slave apparatus 220 calculate an intermediate key called an authentication key based on the random number.

Next, the master apparatus 210 transmits a challenge r message 533. The representative registration apparatus 100, when it receives the challenge r message 533, changes it to a challenge message 523 as in the above process so that it reaches the slave apparatus 220. The slave apparatus 220 decrypts the challenge message 523 using the authentication key, and transmits a hash of the message through a challenge response message 524. The representative registration apparatus 100 receives the challenge response message 524 and, as in the above process, changes the message to a challenge response r message 534 so that it reaches the master apparatus 210. If the hash of the message returned through the challenge response r message 534 coincides with a hash calculated by the master apparatus 210, it means that the master apparatus 210 was able to authenticate the slave apparatus 220 and is allowed to transmit the information of a common key, referred to as a common key K2 hereinafter, which is shared between the master apparatus 210 and the slave apparatus 220.

Next, the master apparatus 210 encrypts, using the authentication key, information for generating K2 and transmits it through a key generation request r message 535. The representative registration apparatus 100 receives the key generation request r message 535 and, as in the above process, changes the message to a key generation request message 525 so that it reaches the slave apparatus 220. The slave apparatus 220, when it receives the key generation request message 525, returns a key generation response message 526. The representative registration apparatus 100 changes, as in the above process, the key generation response message 526 to a key generation response r message 536 and transfers it to the master apparatus 210. The master apparatus 210 transmits a result notification r message 537, and the representative registration apparatus 100 changes the result notification r message 537 to a result notification message 527, and transfers it to the slave apparatus 220.

Finally, the master apparatus 210 and the slave apparatus 220 generate a common key K2 in Steps 513 and 514.

In this way, the common key K2 can be set between the master apparatus 210 and the slave apparatus 220. Using the common key K2, the slave apparatus 220 can safely acquire from the master apparatus 210 a network key to perform cipher communications in the network.

In the foregoing embodiment, the information for generating the common key K2 is exchanged using a unique method. However, the information may be exchanged using another key exchange system such as; for example, Diffie-Hellman.

The foregoing embodiment of the invention employs a PLC network. However, a representative registration apparatus and system according to the present invention may be used in a network which is constituted by a master apparatus and a slave apparatus, and in which, for registration of a slave apparatus to the network, a registration message having a restricted communication range compared to a normal communication range is exchanged between a master apparatus and the slave apparatus to be registered. Thus, a representative registration apparatus and system according to the present invention can be applied to a network configuration using a wireless LAN.

Note that, besides the foregoing embodiment, the present invention may be used to realize various embodiments. For example, when a slave apparatus is removed from a network, the present invention may be used to cancel the registration of the slave apparatus in the master apparatus.

Note that, in the foregoing embodiment, although description is made as to a common key as an encryption system, a public key may also be used. In this case, a public key is stored in a master apparatus and information of the public key thus stored is transmitted to all authenticated slave apparatuses.

Note that, the master apparatus and the slave apparatus may be ordinary electric products having a communication function (e.g. television, personal computer, refrigerator, air conditioner, or the like).

### Industrial Applicability

An authentication relay apparatus, authentication relay system, and authentication relay method according to the present invention enables registration of a slave apparatus to a network which is constituted by the master apparatus and the slave apparatus when both or one of registration messages having restricted communication ranges between a master apparatus and a slave apparatus to be registered is/are not reached, in the network through which a registration message having a restricted communication range compared to a normal communication range is exchanged between the master apparatus and the slave apparatus to be registered. For example, the authentication relay apparatus, authentication relay system, and authentication relay method according to the present invention are useful when, in a wireless LAN or PLC network, a slave apparatus or a master apparatus is provided in a place outside of a user's reach, or is large in size and cannot be easily moved.

## Claims

1. An authentication relay apparatus (100) which relays an authentication process authenticating at least one of a first communication apparatus (210) and a second communication apparatus (220), both the first communication apparatus (210) and the second communication apparatus (220) being connected to a power line (250), the authentication relay apparatus (100) comprising:
a relay section (101) which relays the authentication process between the first communication apparatus (210) and the second communication apparatus (220) via the power line (250);
a communication range control section (104) which controls at least one of a communication range in relation to the first communication apparatus (210) and a communication range in relation to the second communication apparatus (220);
a storage section (103) for storing a first key (K1) shared with the first communication apparatus (210);
an acquisition section (105) for acquiring information for a second key (K2) which is different from the first key (K1) from the second communication apparatus (220);
an encryption section (101) for encrypting, using the first key (K1) stored in the storage section (103), the information for the second key (K2); and
a transmission section (105) for transmitting the information for the second key (K2) encrypted at the encryption section (101) to the first communication apparatus (210).

2. An authentication relay apparatus (100) according to claim 1, wherein the communication range control section (104) controls the communication range in relation to the second communication apparatus (220) to be narrower than the communication range in relation to the first communication apparatus (210).

3. An authentication relay apparatus (100) according to claim 1, wherein the information for the second key (K2) is at least one of a MAC address, a random number, a cryptographic algorithm, and a seed.

4. An authentication relay apparatus (100) according to claim 1, wherein:
the encryption section encrypts, using the first key (K1), information for at least one of the first communication apparatus (210) and the second communication apparatus (220), and
the transmission section (105) transmits the information encrypted by the encryption section (101) to the first communication apparatus (210).

5. An authentication relay apparatus (100) according to claim 4, wherein the information is address information for at least one of the first communication apparatus (210) and the second communication apparatus (220).

6. An authentication relay apparatus (100) according to claim 1, wherein the transmission section (105) transmits via the power line (250) the information encrypted by the encryption section (101).

7. An authentication relay apparatus (100) according to claim 1, wherein the authentication relay apparatus (100) is an integrated circuit.

8. A power line communication apparatus (100) according to claim 1, further comprising a key generation section (11a) for generating at least one of the first key (K1) and second key (K2).

9. An authentication relay system comprising:
an authentication relay apparatus (100) according to claim 1 the first communication apparatus (210) serving as a master apparatus; and
the second communication apparatus (220) serving as a slave apparatus

10. An authentication relay system according to claim 9, wherein the communication range control section (104) is arranged for controlling communication ranges such that a communication range in relation to the second communication apparatus (220) becomes narrower than a communication range of the authentication relay apparatus (100) in relation to the first communication apparatus (210).

11. An authentication relay method for relaying an authentication process authenticating at least one of a first communication apparatus (210) and a second communication apparatus (220), both the first communication apparatus (210) and the second communication apparatus (220) being connected to a power line (250), the method comprising the steps of:
relaying the authentication process between the first communication apparatus (210) and the second communication apparatus (220) via a power line (250);
controlling at least one of a communication range in relation to the first communication apparatus (210) and a communication range in relation to the second communication apparatus (220),
storing a first key (K1) shared with the first communication apparatus (210);
acquiring information for a second key (K2) which is different from the first key (K1) from the second communication apparatus (220);
encrypting the information for the second key (K2) by the first key (K1); and
transmitting the encrypted information for the second key (K2) to the first communication apparatus (210).

## Patentansprüche

1. Authentifizierungsrelaisvorrichtung (100), die einen Authentifizierungsprozess weiterleitet, mit dem eine erste Kommunikationsvorrichtung (210) und/oder eine zweite Kommunikationsvorrichtung (220) authentifiziert werden, wobei die erste Kommunikationsvorrichtung (210) und die zweite Kommunikationsvorrichtung (220) beide mit einer Stromleitung (250) verbunden sind, wobei die Authentifizierungsrelaisvorrichtung (100) umfasst:
einen Relaisabschnitt (101), der den Authentifizierungsprozess zwischen der ersten Kommunikationsvorrichtung (210) und der zweiten Kommunikationsvorrichtung (220) über die Stromleitung (250) weiterleitet,
einen Kommunikationsbereichssteuerabschnitt (104), der einen Kommunikationsbereich bezüglich der ersten Kommunikationsvorrichtung (210) und/oder einen Kommunikationsbereich bezüglich der zweiten Kommunikationsvorrichtung (220) steuert,
einen Speicherabschnitt (103) zum Speichern eines mit der ersten Kommunikationsvorrichtung (210) geteilten ersten Schlüssels (K1),
einen Beschaffungsabschnitt (105) zum Beschaffen von Information hinsichtlich eines zweiten Schlüssels (K2), der sich vom ersten Schlüssel (K1) unterscheidet, von der zweiten Kommunikationsvorrichtung (220),
einen Verschlüsselungsabschnitt (101) zum Verschlüsseln der Information hinsichtlich des zweiten Schlüssels (K2) unter Verwendung des ersten Schlüssels (K1), der in dem Speicherabschnitt (103) gespeichert ist, und
einen Übermittlungsabschnitt (105), zum Übermitteln der Information hinsichtlich des zweiten Schlüssels (K2), die in dem Verschlüsselungsabschnitt (101) verschlüsselt wurde, an die erste Kommunikationsvorrichtung (210).

2. Authentifizierungsrelaisvorrichtung (100) nach Anspruch 1, wobei
der Kommunikationsbereichssteuerabschnitt (104) den Kommunikationsbereich hinsichtlich der zweiten Kommunikationsvorrichtung (220) so steuert, dass er enger ist als der Kommunikationsbereich hinsichtlich der ersten Kommunikationsvorrichtung (210).

3. Authentifizierungsrelaisvorrichtung (100) nach Anspruch 1, wobei
die Information hinsichtlich des zweiten Schlüssels (K2) wenigstens eins aus einer MAC-Adresse, einer Zufallszahl, einem kryptographischen Algorithmus und einem Startwert ist.

4. Authentifizierungsrelaisvorrichtung (100) nach Anspruch 1, wobei:
der Verschlüsselungsabschnitt unter Verwendung des ersten Schlüssels (K1) Information hinsichtlich der ersten Kommunikationsvorrichtung (210) und/oder der zweiten Kommunikationsvorrichtung (220) verschlüsselt und
der Übermittlungsabschnitt (105) die durch den Verschlüsselungsabschnitt (101) verschlüsselte Information an die erste Kommunikationsvorrichtung (210) übermittelt.

5. Authentifizierungsrelaisvorrichtung (100) nach Anspruch 4, wobei
die Information Adressinformation hinsichtlich der ersten Kommunikationsvorrichtung (210) und/oder der zweiten Kommunikationsvorrichtung (220) ist.

6. Authentifizierungsrelaisvorrichtung (100) nach Anspruch 1, wobei
der Übermittlungsabschnitt (105) die durch den Verschlüsselungsabschnitt (101) verschlüsselte Information über die Stromleitung (250) übermittelt.

7. Authentifizierungsrelaisvorrichtung (100) nach Anspruch 1, wobei die Authentifizierungsrelaisvorrichtung (100) eine integrierte Schaltung ist.

8. Stromleitungskommunikationsvorrichtung (100) nach Anspruch 1, ferner mit einem Schlüsselerzeugungsabschnitt (11a) zum Erzeugen des ersten Schlüssels (K1) und/oder des zweiten Schlüssels (K2).

9. Authentifizierungsrelaissystem, mit:
einer Authentifizierungsrelaisvorrichtung (100) nach Anspruch 1,
der ersten Kommunikationsvorrichtung (210), die als eine Master-Vorrichtung dient, und
der zweiten Kommunikationsvorrichtung (220), die als eine Slave-Vorrichtung dient.

10. Authentifizierungsrelaissystem nach Anspruch 9,
wobei der Kommunikationsbereichssteuerabschnitt (104) ausgestaltet ist, Kommunikationsbereiche so zu steuern, dass ein Kommunikationsbereich hinsichtlich der zweiten Kommunikationsvorrichtung (220) enger als ein Kommunikationsbereich der Authentifizierungsrelaisvorrichtung (100) hinsichtlich der ersten Kommunikationsvorrichtung (210) wird.

11. Authentifizierungsrelaisverfahren zum Weiterleiten eines Authentifizierungsprozess, mit dem eine erste Kommunikationsvorrichtung (210) und/oder eine zweite Kommunikationsvorrichtung (220) authentifiziert werden, wobei die erste Kommunikationsvorrichtung (210) und die zweite Kommunikationsvorrichtung (220) beide mit einer Stromleitung (250) verbunden sind, wobei das Verfahren die Schritte umfasst:
Weiterleiten des Authentifizierungsprozesses zwischen der ersten Kommunikationsvorrichtung (210) und der zweiten Kommunikationsvorrichtung (220) über die Stromleitung (250),
Steuern eines Kommunikationsbereichs bezüglich der ersten Kommunikationsvorrichtung (210) und/oder eines Kommunikationsbereichs bezüglich der zweiten Kommunikationsvorrichtung (220),
Speichern eines mit der ersten Kommunikationsvorrichtung (210) geteilten ersten Schlüssels (K1),
Beschaffen von Information hinsichtlich eines zweiten Schlüssels (K2), der sich vom ersten Schlüssel (K1) unterscheidet, von der zweiten Kommunikationsvorrichtung (220),
Verschlüsseln der Information hinsichtlich des zweiten Schlüssels (K2) unter Verwendung des ersten Schlüssels (K1) und
Übermitteln der verschlüsselten Information hinsichtlich des zweiten Schlüssels (K2) an die erste Kommunikationsvorrichtung (210).

## Revendications

1. Dispositif de relais d'authentification (100) qui relaie un processus d'authentification par lequel un premier dispositif de communication (210) et/ou un deuxième dispositif de communication (220) sont authentifiés, le premier dispositif de communication (210) et le deuxième dispositif de communication (220) étant reliés tous les deux à une ligne électrique (250), ledit dispositif de relais d'authentification (100) comprenant:
une section de relais (101) qui relaie le processus d'authentification entre le premier dispositif de communication (210) et le deuxième dispositif de communication (220) via ladite ligne électrique (250),
une section de commande de plage de communication (104) qui commande une plage de communication en relation avec le premier dispositif de communication (210) et/ou une plage de communication en relation avec le deuxième dispositif de communication (220),
une section de stockage (103) pour stocker une première clé (K1) partagée avec le premier dispositif de communication (210),
une section d'acquisition (105) pour acquérir, en provenance dudit deuxième dispositif de communication (220), de l'information relative à une deuxième clé (K2) qui est différente de la première clé (K1),
une section de chiffrement (101) pour chiffrer l'information relative à la deuxième clé (K2) en utilisant la première clé (K1) stockée dans ladite section de stockage (103), et
une section de transmission (105) pour transmettre, au premier dispositif de communication (210), l'information relative à la deuxième clé (K2), chiffrée dans la section de chiffrement (101).

2. Dispositif de relais d'authentification (100) selon la revendication 1, dans lequel
ladite section de commande de plage de communication (104) commande la plage de communication en relation avec le deuxième dispositif de communication (220) de telle manière qu'elle est pus étroite que la plage de communication en relation avec le premier dispositif de communication (210).

3. Dispositif de relais d'authentification (100) selon la revendication 1, dans lequel
l'information relative à la deuxième clé (K2) est au moins l'un(e) parmi une adresse MAC, un nombre aléatoire, un algorithme cryptographique et une valeur de départ.

4. Dispositif de relais d'authentification (100) selon la revendication 1, dans lequel:
ladite section de chiffrement chiffre de l'information relative au premier dispositif de communication (210) et/ou au deuxième dispositif de communication (220), en utilisant la première clé (K1), et
ladite section de transmission (105) transmet, au premier dispositif de communication (210), l'invention chiffrée par ladite section de chiffrement (101).

5. Dispositif de relais d'authentification (100) selon la revendication 4, dans lequel
l'information est de l'information d'adresse relative au premier dispositif de communication (210) et/ou au deuxième dispositif de communication (220).

6. Dispositif de relais d'authentification (100) selon la revendication 1, dans lequel
ladite section de transmission (105) transmet l'information chiffrée par la section de chiffrement (101), via ladite ligne électrique (250).

7. Dispositif de relais d'authentification (100) selon la revendication 1, dans lequel le dispositif de relais d'authentification (100) est un circuit intégré.

8. Dispositif de communication par ligne électrique (100) selon la revendication 1, comprenant en outre une section de génération de clé (11a) destinée à générer la première clé (K1) et/ou la deuxième clé (K2).

9. Système de relais d'authentification comprenant:
un dispositif de relais d'authentification (100) selon la revendication 1,
le premier dispositif de communication (210) qui fait office d'un dispositif maître et
le deuxième dispositif de communication (220) qui fait office d'un dispositif esclave.

10. Système de relais d'authentification selon la revendication 9,
dans lequel ladite section de commande de plage de communication (104) est agencée pour commander des plages de communication de telle sorte qu'une plage de communication en relation avec le deuxième dispositif de communication (220) devient plus étroite qu'une plage de communication du dispositif de relais d'authentification (100) en relation avec le premier dispositif de communication (210).

11. Procédé de relais d'authentification pour relayer un processus d'authentification par lequel un premier dispositif de communication (210) et/ou un deuxième dispositif de communication (220) sont authentifiés, le premier dispositif de communication (210) et le deuxième dispositif de communication (220) étant reliés tous les deux à une ligne électrique (250), ledit procédé comprenant les étapes consistant à:
relayer le processus d'authentification entre le premier dispositif de communication (210) et le deuxième dispositif de communication (220) via ladite ligne électrique (250),
commander une plage de communication en relation avec le premier dispositif de communication (210) et/ou une plage de communication en relation avec le deuxième dispositif de communication (220),
stocker une première clé (K1) partagée avec le premier dispositif de communication (210),
acquérir, en provenance dudit deuxième dispositif de communication (220), de l'information relative à une deuxième clé (K2) qui est différente de la première clé (K1),
chiffrer l'information relative à la deuxième clé (K2) en utilisant la première clé (K1), et
transmettre, au premier dispositif de communication (210), l'information chiffrée relative à la deuxième clé (K2).
